# EUROPEAN PATENT APPLICATION

(11) **EP 1 729 290 A1**
(43) Date of publication of application: **06.12.2006**
(21) Application number: 06252777.5
(22) Date of filing: 30.05.2006
(51) Int. Cl.: G11B 5/55

(54) **Music playback apparatus and processing control method**

(30) Priority: 31.05.2005 JP 2005159447
(71) Applicant: SONY CORPORATION, Tokyo 141-0001 (JP)
(72) Inventor: Katsuya, Shirai c/o Sony Corporation, Tokyo 141-0001 (JP); Yoichiro, Sako c/o Sony Corporation, Tokyo 141-0001 (JP); Toshiro, Terauchi c/o Sony Corporation, Tokyo 141-0001 (JP); Makoto, Inoue c/o Sony Corporation, Tokyo 141-0001 (JP); Yasushi, Miyajima c/o Sony Corporation, Tokyo 141-0001 (JP); Motoyuki, Takai c/o Sony Corporation, Tokyo 141-0001 (JP); Kenichi, Makino c/o Sony Corporation, Tokyo 141-0001 (JP)
(74) Representative: Smith, Samuel Leonard

(57) **Abstract**

A processing control method for a portable music playback apparatus includes the steps of determining whether a motion mode of the music playback apparatus is a steady-motion mode that is associated with motion of a user or an unsteady-motion mode that is not associated with the motion of the user by analyzing an output of a motion sensor installed in the music playback apparatus; and switching processing of the music playback apparatus in accordance with a determination result obtained by the determining step.

## Description

### CROSS REFERENCES TO RELATED APPLICATIONS

The present invention contains subject matter related to Japanese Patent Application JP 2005-159447 filed in the Japanese Patent Office on May 31, 2005, the entire contents of which are incorporated herein by reference.

### BACKGROUND OF THE INVENTION

### 1. Field of the Invention

The present invention relates to portable music playback apparatuses and processing control methods for portable music playback apparatuses.

### 2. Description of the Related Art

Due to improvements in sensing technologies and miniaturization and higher performance of sensors, various sensors are installed and used in various apparatuses and devices.

More specifically, such sensors are installed in movable bodies, such as vehicles, aircrafts, and ships, to detect positions and traveling states of the movable bodies. Alternatively, such sensors are attached to human bodies or installed in apparatuses carried by human beings to detect human motion and to acquire external information around human beings.

In addition, as a method for using a sensor for playback of music, technologies for detecting the pace of motion of a user using a sensor attached to the user's body and for changing the playback tempo of music depending on the detected pace are described in Japanese Unexamined Patent Application Publication Nos. 2001-299980 and 2003-177749.

### SUMMARY OF THE INVENTION

Users often listen to music while walking or jogging (or running), carrying a portable music playback apparatus, such as a compact disk player or a Mini Disc (registered trademark) player. Recently, many users of cellular phone terminals walk or jog while listening to music using cellular phone terminals. In addition, portable music playback apparatuses using a hard disk are considered.

However, when a user is listening to music with a portable music playback apparatus while walking or jogging, changing the playback tempo of music in accordance with the pace of user's motion is inadequate. For example, countermeasures to handle a situation in which the user drops the music playback apparatus while walking or jogging are necessary.

Thus, it is desirable to handle a situation, such as falling of a music playback apparatus, without making a user aware of processing with a simple configuration when the user is listening to music with the portable music playback apparatus while walking or jogging.

A processing control method according to an embodiment of the present invention for a portable music playback apparatus includes the steps of determining whether a motion mode of the music playback apparatus is a steady-motion mode that is associated with motion of a user or an unsteady-motion mode that is not associated with the motion of the user by analyzing an output of a motion sensor installed in the music playback apparatus; and switching processing of the music playback apparatus in accordance with a determination result obtained by the determining step.

In the above-mentioned processing control method, instead of directly detecting motion of a user using a sensor attached, separately from a music playback apparatus carried by the user, to a hand, a leg, or the waist of the user, a motion sensor installed in a music playback apparatus carried by a user detects motion of the music playback apparatus, determines whether a motion mode of the music playback apparatus is a steady-motion mode that is associated with motion of the user, such as walking or running, or an unsteady-motion mode that is not associated with the motion of the user, such as falling of the music playback apparatus, by analyzing an output of the motion sensor, and switches processing of the music playback apparatus in accordance with a determination result. Thus, such a motion sensor is capable of handling motion of a user, such as walking or running, and a situation, such as falling of the music playback apparatus, without making the user aware of processing.

As described above, when a user is listening to music with a portable music playback apparatus while walking or jogging, a situation, such as falling of the music playback apparatus, can be handled without making the user aware of processing with a simple configuration.

### BRIEF DESCRIPTION OF THE DRAWINGS

Fig. 1 shows an example of a music playback apparatus and a music playback system according to an embodiment of the present invention;
Fig. 2 illustrates a state in which a user is listening to music while walking or running;
Fig. 3 shows conditions for explaining a sensor output and correlation analysis;
Fig. 4 shows an example of a track information database;
Figs. 5A shows an example when a track is selected;
Fig. 5B shows an example when a playlist is selected;
Fig. 6 shows an example when the tempo of a track being played back is changed;
Fig. 7 is a flowchart showing part of a series of processing in a processing control method; and
Fig. 8 is a flowchart showing part of the series of processing in the processing control method.

### DESCRIPTION OF THE PREFERRED EMBODIMENTS

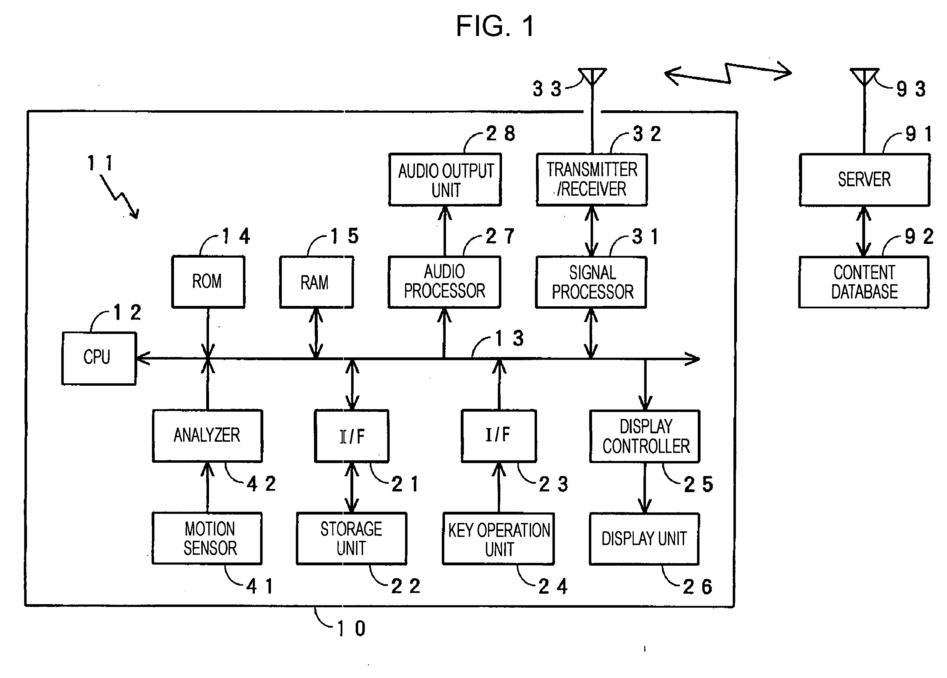

Fig. 1 shows an example of a music playback apparatus according to an embodiment of the present invention and a music playback system using the music playback apparatus.

Referring to Fig. 1, a music playback apparatus 10 includes a central processing unit (CPU) 12. A read-only memory (ROM) 14 in which a program and data are written and a random-access memory (RAM) 15 to which a program and data are loaded are connected to a bus 13. The CPU 12, the ROM 14, and the RAM 15 function as a controller 11 that controls each unit of the music playback apparatus 10 and that performs a processing control method as described later.

A storage unit 22 is connected to the bus 13 via an interface 21. A key operation unit 24 is connected to the bus 13 via an interface 23. A display unit 26 is connected to the bus 13 via a display controller 25. An audio output unit 28 is connected to the bus 13 via an audio processor 27.

The storage unit 22 includes an internal hard disk, a semiconductor memory, a removable disc storage medium, or a removable card storage medium. Music data (track data), music information (track information), and the like are recorded in the storage unit 22. The audio processor 27 performs audio processing for music playback and the like performed by the music playback apparatus 10. The audio output unit 28 is a speaker installed in the music playback apparatus 10. The audio output unit 28 may include headphones and a speaker connected to the music playback apparatus 10.

A transmitter/receiver 32 is connected to the bus 13 via a signal processor 31. An antenna 33 is connected to the transmitter/receiver 32.

The signal processor 31 processes signals received via the transmitter/receiver 32 and signals transmitted via the transmitter/receiver 32. The transmitter/receiver 32 and the antenna 33 are connected to an external server 91 via a wireless network.

A content database 92 and an antenna 93 are connected to the server 91. The server 91 transmits, in accordance with a request from the music playback apparatus 10, to the music playback apparatus 10 track data stored in the content database 92.

A motion sensor 41 is installed in the music playback apparatus 10. The motion sensor 41 includes an acceleration sensor, a gyro-sensor, and the like. Since the motion sensor 41 is installed in the music playback apparatus 10, the motion sensor 41 is integrated with the music playback apparatus 10. Thus, the motion sensor 41 is capable of detecting motion of the music playback apparatus 10.

The motion sensor 41 is connected to the bus 13 via an analyzer 42. The analyzer 42 determines a motion mode of the music playback apparatus 10 by converting an output signal of the motion sensor 41 into digital data and analyzing the digital data, as described later.

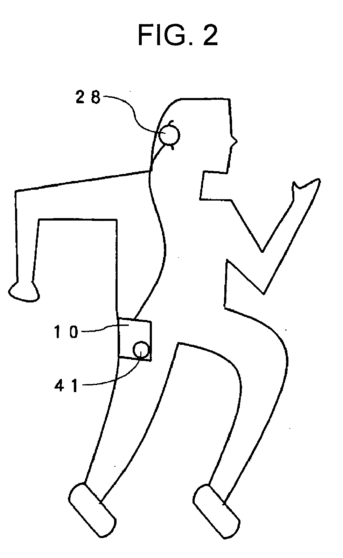

In this embodiment, when a user is listening to music with the portable music playback apparatus 10 provided with the motion sensor 41 while walking or jogging (or running), as shown in Fig. 2, the motion mode of the music playback apparatus 10 is determined to be a walking fit mode (a mode in which the music playback apparatus 10 moves in association with walking of the user), a running fit mode (a mode in which the music playback apparatus 10 moves in association with running of the user), or a falling mode (a mode in which the music playback apparatus 10 is falling).

Motion of walking or running of human beings is periodic. Thus, when the analyzer 42 analyzes output signals of the motion sensor 41 on the basis of correlation analysis and determines whether or not the motion of the music playback apparatus 10 is periodic, that is, whether or not the motion of the music playback apparatus 10 is steady motion, it is capable of being determined whether or not the motion of the music playback apparatus 10 is in association with walking or running of the user. In addition, if the motion of the music playback apparatus 10 is periodic, it is capable of being determined whether the user is walking or running by detecting the cycle.

In general, a walking speed is about 50 to 100 meters per minute, and a jogging or running speed is about 140 meters per minute or more. In addition, the average stride length of men is about 70 cm and the average stride length of women is about 65 cm.

When the stride rate of a male user is 200 steps per minute or more, it is determined that the user is running or jogging. When the stride rate of a male user is 143 steps per minute or less, it is determined that the user is walking. In addition, when the stride rate of a female user is 215 steps per minute or more, it is determined that the user is running or jogging. When the stride rate of a female user is 153 steps per minute or less, it is determined that the user is walking.

Alternatively, it is determined whether a user is walking or running using a matched filter.

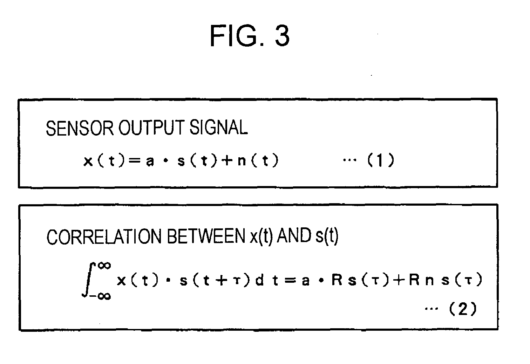

More specifically, when a signal component s(t) based on motion (walking or running) of the user with an intensity (amplitude) a is included in an output signal x(t) of the motion sensor 41 and a noise component is represented by n(t), the sensor output signal x(t) is represented by condition (1) in Fig. 3. The correlation between the sensor output signal x(t) and the signal component s(t) is represented by condition (2) shown in Fig. 3 in which "Rs(τ)" represents an autocorrelation function of the signal component s(t) and "Rns(τ)" represents a cross-correlation function of the signal component s(t) and the noise component n(t).

Thus, if there is no correlation between the signal component s(t) and the noise component n(t), the cross-correlation function "Rns(τ)" is 0. Thus, the intensity a of the signal component s(t) and the autocorrelation function Rs(τ) can be acquired.

When a user is walking, an impact about 1.1 to 1.2 times the weight of the user is exerted on the user's body. When a user is running (or jogging), an impact about 3 to 4 times the weight of the user is exerted on the user's body. Thus, the determination of whether the motion of the user is walking or running (or jogging) can be performed by detecting the intensity a of the signal component s(t).

When the motion of the music playback apparatus 10 detected by the motion sensor 41 is not periodic, the music playback apparatus 10 does not move in association with the motion (walking or running) of the user. In this embodiment, as an example of the case where the motion of the music playback apparatus 10 is not periodic, falling of the music playback apparatus 10 is detected, as mentioned above.

A triaxial acceleration sensor is suitably used as the motion sensor 41 for detecting falling of the music playback apparatus 10.

In triaxial acceleration sensors, a value A(= a-g) obtained by subtracting a gravitational acceleration component g from a motion acceleration component a for each of the three axes is an indicated acceleration. Since the motion acceleration component a is equal to the gravitational acceleration component g during free falling, the value A is 0. In particular, when the three axes are X, Y, and Z axes that are orthogonal to each other, all the values A for the three axes are 0 only when an object is freely falling. Thus, it is reliably detected that the object is freely falling.

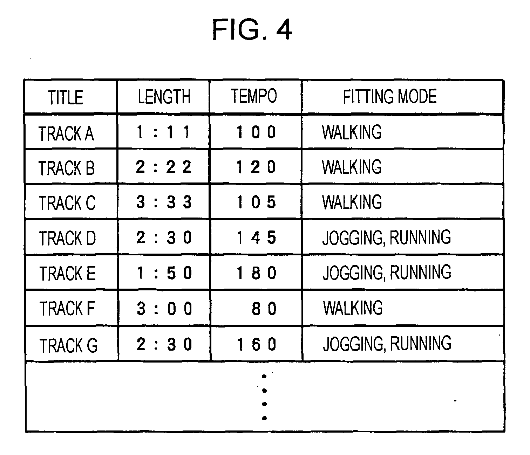

Fig. 4 shows an example of a track information database recorded in the storage unit 22 of the music playback apparatus 10. In the example shown in Fig. 4, the title, the length (original playback time), the tempo (the original tempo), and the fitting mode of each track are recorded as track information on the track.

The fitting mode is set for walking or running (or jogging) in accordance with the tempo of a track.

The user is able to select a favorite track from among many tracks recorded in the storage unit 22 and to record the favorite track in a list, such as a playlist of walking or a playlist for running.

In the processing control method according to this embodiment, when it is determined from a determination result of the analyzer 42 that the motion mode of the music playback apparatus 10 is the walk fit mode or the running fit mode, the controller 11 selects, as a track to be played back, a track or a playlist corresponding to a detected number of steps (a walking pace or a running pace).

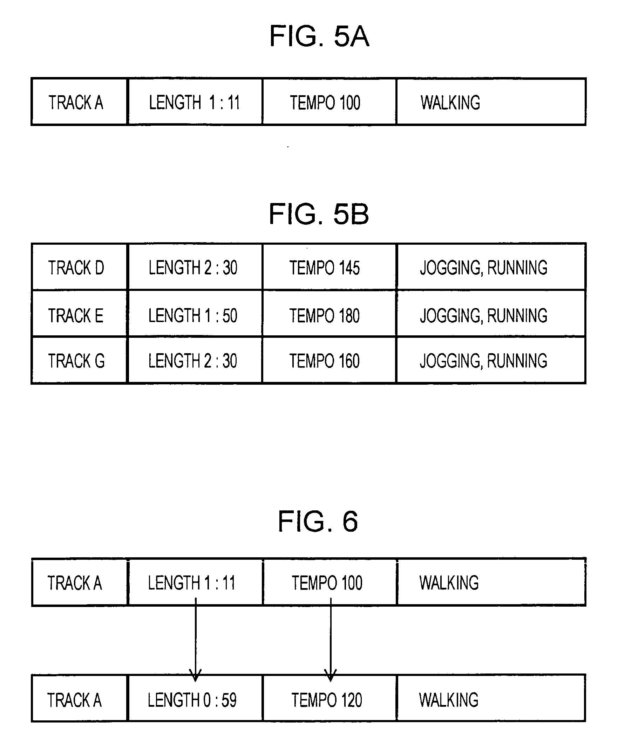

Fig. 5A shows an example in which it is determined that the motion of the music playback apparatus 10 is in the walking fit mode and track A (tempo 100) is selected. Fig. 5B shows an example in which it is determined that the motion of the music playback apparatus 10 is in the running fit mode and a playlist including track D (tempo 145), track E (tempo 180), and track G (tempo 160) is selected.

When, as shown in Fig. 5A, a single track is selected, the controller 11 reads from the storage unit 22 track data of the selected track, transfers to the audio processor 27 the track data, and causes the audio processor 27 to play back the track data.

Thus, the user is able to concentrate on walking or running (or jogging) without being bothered with selecting a track during the exercise.

When, as shown in Fig. 5B, a playlist (a plurality of tracks) is selected, the controller 11 selects from the selected playlist a track at random or a track of a tempo close to the walking pace at that time, reads from the storage unit 22 track data of the selected track, transfers to the audio processor 27 the track data, and causes the audio processor 27 to play back the track data. Alternatively, the controller 11 presents the selected playlist to the user by displaying the playlist on the display unit 26, reads from the storage unit 22 track data of a track designated by the user, transfers to the audio processor 27 the track data, and causes the audio processor 27 to play back the track data.

When the controller 11 selects from the selected playlist a track at random or a track of a tempo close to the walking pace at that time, the user is able to concentrate on walking or running (or jogging) without being bothered with selecting a track during the exercise, as in the case where a single track is selected.

When a track or a playlist is selected during playback of a track, after playback of the track that is being played back is completed, playback of the selected track or a track designated from the selected playlist starts. Alternatively, after playback of the track that is being played back is interrupted, playback of the selected track or a track designated from the selected playlist starts. Alternatively, after the tempo of the track that is being played back is changed in accordance with the detected number of steps (walking pace or running pace) and playback of the track is completed, playback of the selected track or a track designated from the selected playlist starts.

Fig. 6 shows an example of a case in which the tempo of a track being played back is changed, as mentioned above. In the example shown in Fig. 6, since it is detected that the number of steps is 120 during playback of the track A (the original tempo is 100 and the original length is 1 minutes 11 seconds), the tempo of the track A is increased to 120. As a technology for changing the tempo of a track, a known technology described, for example, in Japanese Unexamined Patent Application Publication No. 2001-255882 can be used.

Instead of selection of a track based on a motion mode determination result, the user may select a track. The controller 11 may control only a method for playing back a track, such as changing of the tempo of the track, in accordance with a motion mode determination result.

If it is determined that the motion mode of the music playback apparatus 10 is the falling mode, that is, if it is determined that the music playback apparatus 10 is falling, the controller 11 performs processing for preventing the music playback apparatus 10 from being damaged (or broken down) due to falling of the music playback apparatus 10. For example, if the storage unit 22 is a hard disk, processing for saving the head to a save area is performed. In addition, according to need, the power of the music playback apparatus 10 or the storage unit 22 is turned off.

Since this processing must be performed before the music playback apparatus 10 is hit on the ground (or floor), the detection of whether the music playback apparatus 10 is falling or not must be always performed as parallel processing.

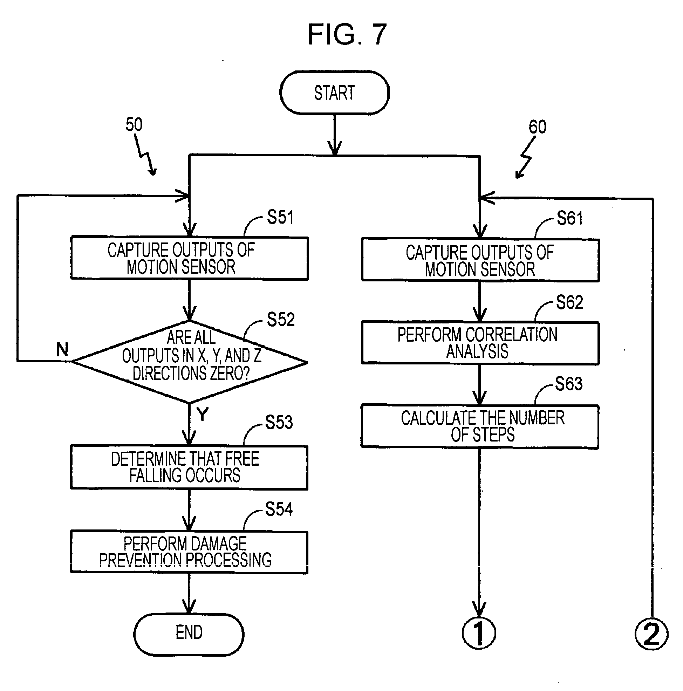

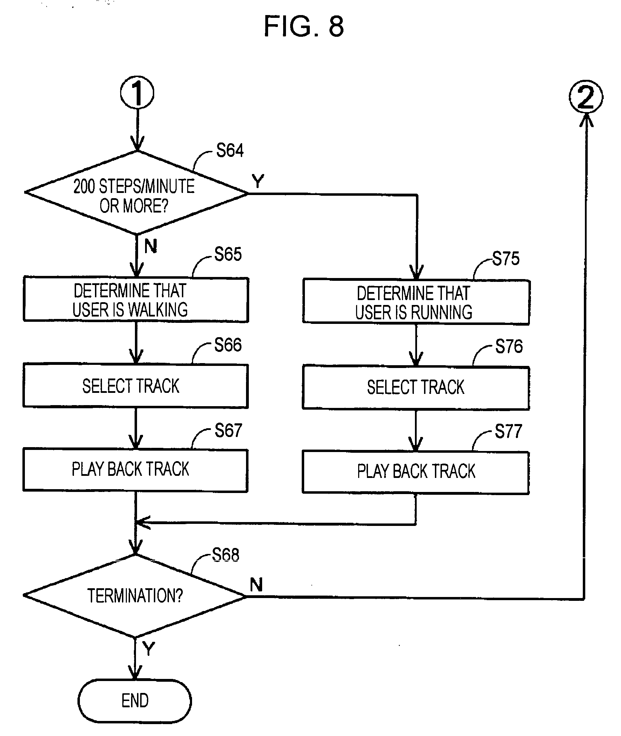

Figs. 7 and 8 show an example of a process performed by the controller 11 of the music playback apparatus 10 in the above-mentioned processing control method.

In the example shown in Figs. 7 and 8, the controller 11 performs, as parallel processing, processing 50 for an abnormal state corresponding to a case where the music playback apparatus 10 is falling and processing 60 for a normal state corresponding to a case where the motion mode of the music playback apparatus 10 is the walking fit mode or the running fit mode.

In the processing 50 for the abnormal state, the controller 11 starts the processing by a user instruction to start the processing. In step S51, the controller 11 captures outputs of the motion sensor 41, which is a triaxial acceleration sensor described in the above-mentioned example, into the analyzer 42. In step S52, the controller 11 determines whether or not all the outputs (differences A = a-g) in the X, Y, and Z directions are 0 by calculation using a gravitational acceleration detected separately.

If it is determined in step S52 that all the outputs in the X, Y, and Z directions are 0, the controller 11 proceeds to step S53. In step S53, the controller 11 determines that the music playback apparatus 10 is in the process of free falling. Then, in step S54, the controller 11 performs processing for preventing the music playback apparatus 10 from being damaged, as described above. Then, all the processing ends.

If it is determined in step S52 that all the outputs in the X, Y, and Z directions are not 0, the controller 11 returns to step S51 to repeat the processing 50 for the abnormal state by capturing outputs of the motion sensor 41. This repetition is performed during a short period of time.

In the processing 60 for the normal state, in step S61, the controller 11 captures outputs of the motion sensor 41 for a period of time in which correlation analysis can be performed. Then, in step S62, the controller 11 performs correlation analysis on the captured outputs to determine whether or not the motion of the music playback apparatus 10 is periodic, as described above.

Then, in step S63, the controller 11 calculates the number of steps (walking pace or running pace) of the user from the cycle of the motion of the music playback apparatus 10. Then, in step S64, the controller 11 determines whether the calculated number of steps is 200 steps per minute or more.

If it is determined in step S64 that the number of steps is 200 steps per minute or less, the controller 11 proceeds to step S65. In step S65, the controller 11 determines that the motion mode of the music playback apparatus 10 is the walking fit mode, that is, the user is walking. Then, in step S66, the controller 11 selects a track for the walking fit mode. Then, in step S67, the controller 11 plays back the track, and the process proceeds to step S68.

If it is determined in step S64 that the number of steps is 200 steps per minute or more, the process proceeds to step S75. In step S75, the controller 11 determines that the motion mode of the music playback apparatus 10 is the running fit mode, that is, the user is running. Then, in step S76, the controller 11 selects a track for the running fit mode. Then, in step S77, the controller 11 plays back the track, and the process proceeds to step S68.

In step S68, the controller 11 determines whether or not the entire process is to be ended. If the entire process is to be ended in accordance with a user instruction to end the process, the entire process ends. If the entire process should not be ended, the controller 11 returns to step S61 to repeat the processing 60 for the normal state.

It should be understood by those skilled in the art that various modifications, combinations, sub-combinations and alterations may occur depending on design requirements and other factors insofar as they are within the scope of the appended claims or the equivalents thereof.

## Claims

1. A processing control method for a portable music playback apparatus, the method comprising the steps of:
determining whether a motion mode of the music playback apparatus is a steady-motion mode that is associated with motion of a user or an unsteady-motion mode that is not associated with the motion of the user by analyzing an output of a motion sensor installed in the music playback apparatus; and
switching processing of the music playback apparatus in accordance with a determination result obtained by the determining step.

2. The processing control method according to Claim 1, wherein:
the unsteady-motion mode is a mode representing that the music playback apparatus is falling; and
when the motion mode of the music playback apparatus is determined to be the unsteady-motion mode, processing for preventing the music playback apparatus from being damaged due to falling of the music playback apparatus is performed.

3. The processing control method according to Claim 1 or 2, wherein when the motion mode of the music playback apparatus is determined to be the steady-motion mode, selection of a track to be played back by the music playback apparatus or a method for playing back a track that is being played back by the music playback apparatus is controlled.

4. The processing control method according to Claim 1, 2 or 3, wherein:
processing corresponding to a walking fit mode or a running fit mode, which is the steady-motion mode, is performed;
the walking fit mode is a motion mode that is associated with walking of the user; and
the running fit mode is a motion mode that is associated with running of the user.

5. A portable music playback apparatus comprising:
a storage unit that stores track data and track information;
a playback processor that processes the track data stored in the storage unit and that plays back a track;
a motion sensor installed in the music playback apparatus; and
a processing controller that determines whether a motion mode of the music playback apparatus is a steady-motion mode or an unsteady-motion mode by analyzing an output of the motion sensor and that switches processing of the music playback apparatus in accordance with a determination result.

6. The music playback apparatus according to Claim 5, wherein:
the unsteady-motion mode is a mode representing that the music playback apparatus is falling; and
when the motion mode of the music playback apparatus is determined to be the unsteady-motion mode, the processing controller performs processing for preventing the music playback apparatus from being damaged due to falling of the music playback apparatus.

7. The music playback apparatus according to Claim 5 or 6, wherein when the motion mode of the music playback apparatus is determined to be the steady-motion mode, the processing controller controls selection of a track to be played back by the playback processor or a method for playing back a track that is being played back by the playback processor.

8. The music playback apparatus according to Claim 5, 6 or 7, wherein:
the processing controller performs processing corresponding to a walking fit mode or a running fit mode, which is the steady-motion mode;
the walking fit mode is a motion mode that is associated with walking of the user; and
the running fit mode is a motion mode that is associated with running of the user.

9. The music playback apparatus according to Claim 5, 6, 7 or 8, wherein the motion sensor is a triaxial acceleration sensor.
